# FASCICULE DE BREVET EUROPEEN

(11) **EP 3 113 957 B1**
(45) Date de publication et mention de la délivrance du brevet: **28.03.2018**
(21) Numéro de dépôt: 15707353.7
(22) Date de dépôt: 27.02.2015
(51) Int. Cl.: B42D 25/00

(54) **PROCÉDÉ DE MARQUAGE D'UNE MATRICE HOLOGRAPHIQUE**
VERFAHREN ZUR MARKIERUNG EINER HOLOGRAFISCHEN MATRIX
METHOD OF MARKING A HOLOGRAPHIC MATRIX

(30) Priorité: 03.03.2014 FR 1451697
(43) Date de publication de la demande: 11.01.2017
(73) Titulaire: Advanced Track & Trace, 92500 Rueil-Malmaison (FR)
(72) Inventeur: MASSICOT, Jean-Pierre, F-92500 Rueil-Malmaison (FR); FOUCOU, Alain, F-92500 Rueil-Malmaison (FR); SAGAN, Zbigniew, F-92500 Rueil-Malmaison (FR)
(74) Mandataire: Cornuejols, Georges
(86) Numéro de dépôt international: PCT/EP2015/054208
(87) Numéro de publication internationale: WO 2015/132162

(56) Documents cités:
- WO-A1-2007/088288
- FR-A1- 2 915 600

## Description

### DOMAINE TECHNIQUE DE L'INVENTION

La présente invention concerne un procédé de marquage d'une matrice holographique et une matrice holographique ainsi obtenue. Elle s'applique, notamment à la fabrication de documents de sécurité et de cartes, d'identification ou de paiement, portant un hologramme.

### ETAT DE LA TECHNIQUE

On connaît de nombreuses manières de protéger un contenu, ou message porté sur un support. Par exemple, un codage ou un chiffrement est appliqué aux données constituant ce message. Cependant, la simple connaissance de la clé de décodage ou de déchiffrement permet d'accéder au message. Or ces clés doivent être stockées sur des supports, par exemple papiers, plastiques ou électroniques ou sur des serveurs. Que ces clés soient portées par l'utilisateur ou stockés sur un système informatique, un tiers malveillant suffisamment outillé peut les atteindre.

On connait également la demande de brevet internationale WO2007/088288 A1 qui présente un procédé d'authentification utilisant deux codes encrypté avec deux clés secrètes différentes, le premier étant une troncature de message codé, le deuxième étant un nombre aléatoire, un horodatage et la troncature. WO 2007/088288 A1 décrit un procédé selon le préambule de la revendication 1.

Les protections présentées par l'état de la technique sont insuffisantes.

### OBJET DE L'INVENTION

La présente invention vise à remédier à tout ou partie de ces inconvénients.

A cet effet, la présente invention concerne un procédé selon la revendication 1. Grâce à ces dispositions, on forme une matrice holographique dont la copie est détectable, qui porte un message et dont les hologrammes qu'elle permet de réaliser ont aussi la capacité de détection de leurs copies.

Dans des modes de réalisation particuliers, la marque anti-copie représente un message et une pluralité de redondances du message porté par la marque anti-copie.

Dans des modes de réalisation particuliers, au cours de l'étape de formation de la marque anti-copie, on met en oeuvre un laser picoseconde.

Dans des modes de réalisation particuliers, chaque marque anti-copies formée sur la matrice holographique comporte des cellules et présente un taux d'erreurs, imprévisible cellule par cellule, par rapport à la marque numérique anti-copie correspondante, supérieur à cinq pour cent. Selon l'invention, au cours de l'étape de formation d'au moins une marque robuste, pour chaque dite marque robuste, un message portée par ladite marque robuste représente une information extraite d'une image d'au moins une marque anti-copie.

Dans des modes de réalisation particuliers, le message porté par ladite marque robuste représente une identification unique d'au moins une marque anti-copie.

Dans des modes de réalisation particuliers, le message porté par ladite marque robuste représente une information représentative d'au moins deux marques anti-copies ou de leurs positions respectives. Selon l'invention, chaque marque robuste entoure une marque anti-copie.

Dans des modes de réalisation particuliers, la forme de l'hologramme, ou le message porté par l'hologramme représenté par la matrice holographique au cours de l'étape de formation d'une matrice holographique est fonction d'un message porté par la marque anti-copie ou par la marque robuste.

### BREVE DESCRIPTION DES FIGURES

D'autres avantages, buts et caractéristiques particulières de la présente invention ressortiront de la description qui va suivre faite, dans un but explicatif et nullement limitatif, en regard de dessins annexés, dans lesquels :
- la figure 1 représente, schématiquement, un mode de réalisation particulier d'une matrice holographique marquée par le procédé de la présente invention et
- la figure 2 représente, sous forme d'un logigramme, des étapes d'un mode de réalisation particulier du procédé objet de la présente invention.

### DESCRIPTION D'EXEMPLES DE REALISATION DE L'INVENTION

On note, dès à présent, que les figures ne sont pas à l'échelle.

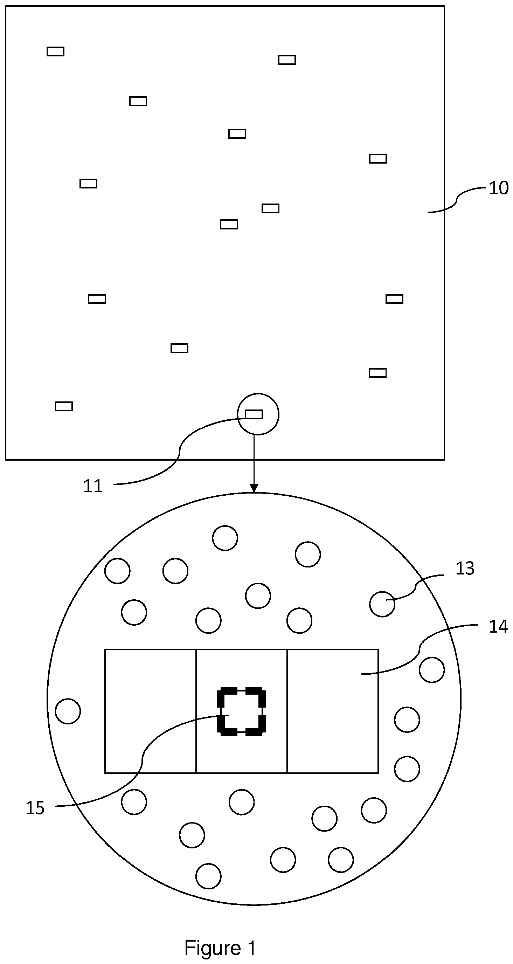

On observe, en figure 1, une matrice (« shim ») holographique 10 portant des marques 11, rectangulaires dans le cas illustré en figure 1. Un agrandissement partiel, représenté en bas de la figure 1, montre qu'une marque 11 est entourée d'éléments holographiques 13 et comporte deux zones :
- une zone 14 de grande capacité, robuste à la copie et l'impression d'hologrammes, représentant un premier message et
- une zone 15 de plus petite capacité destinée à détecter une copie et fragile dès l'impression d'un hologramme, représentant un deuxième message comportant un nombre de redondances élevé.

Les zones 14 et 15 prennent la forme générale de matrices de points. Dans des modes de réalisation, chaque point de chaque matrice ne peut prendre que deux états, par exemple deux directions de polarisation ou deux couleurs différentes.

Par exemple, dès la première impression d'un hologramme, le taux de cellules erronées de la matrice anti-copie 15 est supérieur à cinq pourcent et, préférentiellement, à dix pourcents. Une cellule erronée est une cellule qui présente, sur plus de la moitié de sa surface, un état erroné, par rapport à la matrice numérique original avec laquelle la matrice holographique est réalisée. Une cellule erronée provient d'une erreur d'impression, imprévisible, cellule par cellule, dues aux limites physiques du moyen d'impression, notamment en termes de résolution. Les erreurs s'assimilent ainsi à du bruit, le signal étant formé du contenu de la matrice numérique originale.

Le taux de redondances de la matrice anti-copie 15 est supérieur à cinq et, préférentiellement, supérieur à dix, afin de corriger un taux d'erreurs supérieur à quarante pourcents, après réalisation de copies de l'hologramme original. On rappelle ici que chaque copie augmente le taux de cellules erronées. On détermine si un document et l'hologramme porté par ce document est l'original ou une copie, en mesurant ce taux d'erreurs, par capture d'une image de la zone 15 et
- décompte du nombre de redondances utilisées pour corriger ces erreurs et obtenir le deuxième message,
- en comparant l'image captée une matrice numérique mise à l'échelle ou
- en comparant l'image captée à une image conservée en mémoire et captée dès la fabrication de l'hologramme ;
et en comparant ce taux d'erreurs à une valeur limite prédéterminée, par exemple, dix pour cent, préférentiellement quinze pour cent, de cellules erronées supplémentaires par rapport à l'original imprimé.

Selon l'invention, la seule zone 14, de faible résolution, est intégrée dans la matrice numérique originale à partir de laquelle la matrice holographique (« shim ») est réalisée, la zone 15 étant réalisée par un rayonnement laser picoseconde ou femtoseconde. On rappelle qu'un tir laser femtoseconde a une durée de l'ordre (c'est-à-dire, ici, entre un dixième et dix fois) de la femtoseconde et un tir laser picoseconde une durée de l'ordre de la picoseconde.

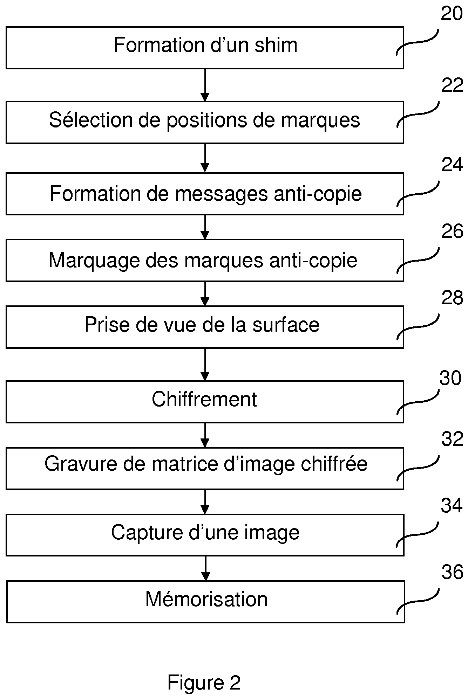

On observe, en figure 2, une étape 20 de formation d'une matrice holographique à partir d'une matrice numérique. Cette matrice holographique est destinée à former des hologrammes par impression. Selon les modes de réalisation, la forme de l'hologramme, ou le message porté par l'hologramme correspondent (c'est-à-dire que l'un est fonction et dépend de l'autre) à au moins l'un des premier et deuxième messages portés par les zones 14 et 15. Au cours de l'étape 20, ces zones 14 et 15 ne sont donc pas intégrées dans la matrice holographique.

Au cours d'une étape 22, une sélection de positions de marques 11 est réalisée. Par exemple, ces marques sont positionnées pour que le centre de chaque marque 11 forme le sommet d'au moins un triangle dont les longueurs des côtés présentent des ratios prédéterminés.

Au cours d'une étape 24, une matrice numérique d'une marque anti-copie 15 est réalisée. Par exemple, on chiffre le deuxième message avec une clé publique d'un bi-clé conforme à l'infrastructure à clés publiques asymétriques « PKI ». Puis, on ajoute des redondances, par exemple par duplication du message chiffré ou par ajout de codes de correction d'erreurs (CRC). Eventuellement, on réalise des permutations d'éléments de code.

Au cours d'une étape 26, on réalise, par au moins un tir pico ou femto seconde, les marques anti-copies sur la matrice holographique 10. Comme indiqué ci-dessus, ce marquage laser provoque un taux d'erreurs, imprévisible cellule par cellule, important dans la marque anti-copie imprimée.

Au cours d'une étape 28, on réalise au moins une prise de vue d'une partie de la surface de la matrice holographique portant au moins une marque anti-copie dans une zone 15. Puis, on traite l'image pour en extraire un taux d'erreur pour chaque marque anti-copie et, éventuellement, une identification unique, par exemple la transformée de Fourier en deux dimensions des valeurs observées dans la marque anti-copie, en conservant les valeurs de plus basses fréquences, par exemple les cinq ou dix premiers termes dans chaque direction, soit 25 à 100 valeurs.

Au cours d'une étape 30, on effectue, pour chaque zone 14 entourant une marque anti-copie 15, un chiffrement d'un premier message qui dépend du résultat obtenu, pour cette marque anti-copie 15, au cours de l'étape 28. Dans des modes de réalisation, le premier message dépend aussi de deuxièmes messages ou de résultats de traitements d'images effectués au cours de l'étape 28 pour au moins une marque anti-copie 15 voisine de la marque anti-copie 15 qui sera entourée par la zone 14.

Au cours d'une étape 32, pour chaque marque anti-copie 15, on grave une matrice chiffrée robuste dans la zone 14 qui entoure la marque anti-copie 15.

Au cours d'une étape 34, on effectue une capture d'image de la matrice holographique portant les zones gravées 14 et 15.

Au cours d'une étape 36, on effectue une mémorisation d'au moins une image captée au cours d'une étape 28 et/ou 34 ou de données obtenues à partir de l'une de ces images, par exemple les identifications uniques déterminées au cours de l'étape 28.

On réalise une origination holographique de grande capacité sur un petit format.

Le shim (matrice en nickel) d'une matrice holographique étant déjà prêt, on tire, avec un laser femtoseconde ou picoseconde, des cellules de petites dimensions qui comportent 20.000 points.

On dispose les cellules dont la combinaison de positions est un code graphique.

Chaque cellule comporte une marque anti-copie unique.

Chaque code comporte une information sur lui-même et sur les valeurs voisines. Un code complet renseigne sur les codes voisins (et peut permettre leur lecture grâce aux redondances qu'il comporte).

On choisit quelques marques anti-copies et on prend une photo de leur environnement. Puis on ajoute le contenu de cette image d'hologramme et l'image ou le contenu d'une marque anti-copie dans une matrice numérique robuste gravée. Cette matrice numérique robuste peut être lue par un outil standard, par exemple un smartphone, à la différence d'une marque anti-copie, qui peut nécessiter une prise de vue rapprochée, avec un objectif adapté.

On peut ainsi vérifier l'authenticité grâce à une mise en correspondance (« matching ») directe, sans accès à une base de données, et de manière sécurisée. La marque anti-copie permet, de plus, une authentification « classique ».

Une résolution permettant une lecture des ripples obtenus par un tir laser permet une authentification dans le domaine nanométrique (les ripples nécessitent une résolution de l'ordre de 240.000 ppi).

Par exemple, on marque une marque anti-copie tous les sept millimètres.

## Revendications

1. Procédé de marquage d'une matrice holographique (10), comportant
- une étape (20) de formation de la matrice holographique configurée pour réaliser des hologrammes par impression,
- une étape (24) de formation d'au moins une zone (15) anti-copie, contenant des redondances, sur ladite matrice holographique et
- une étape de (32) formation d'au moins une zone (14) robuste à la copie sur ladite matrice holographique
au moins une des étapes de formation d'au moins une zone sur ladite matrice holographique mettant en oeuvre une structuration de surface de la matrice holographique par laser,
le procédé étant **caractérisé en ce qu'**il comporte, après ladite étape de formation de ladite zone anti-copie, et avant ladite étape de formation de ladite zone robuste à la copie :
- une étape (28) de prise de vue d'une partie de la surface de la matrice holographique dans ladite zone anti-copie, suivie d'une étape de traitement de l'image obtenue par ladite prise de vue pour en extraire un taux d'erreur pour chaque zone anti-copie,
- une étape (30), pour chaque dite zone robuste entourant une dite zone anti-copie, de chiffrement d'un premier message en utilisant le résultat obtenu, pour cette dite zone anti-copie, au cours de ladite étape de prise de vue, le résultat du chiffrement étant ultérieurement utilisé pour ladite formation de ladite zone robuste.

2. Procédé selon la revendication 1, dans lequel, au cours de l'étape de formation (24) de la zone anti-copie (15), on met en oeuvre un laser picoseconde.

## Patentansprüche

1. Verfahren zur Markierung einer holografischen Matrix (10), umfassend:
- einen Schritt (20) zum Bilden der holografischen Matrix, die konfiguriert ist, um durch Drucken Hologramme zu erzeugen,
- einen Schritt (24) zum Bilden von mindestens einer kopiergeschützten Zone (15), die Redundanzen enthält, auf der holografischen Matrix und
- einen Schritt (32) zum Bilden von mindestens einer kopierfesten Zone (14) auf der holografischen Matrix
wobei mindestens einer der Schritte zum Bilden von mindestens einer Zone auf der holografischen Matrix eine Oberflächenstrukturierung der holografischen Matrix mittels Laser realisiert,
wobei das Verfahren **dadurch gekennzeichnet ist, dass** es nach dem Schritt zum Bilden der kopiergeschützten Zone und vor dem Schritt zum Bilden der kopierfesten Zone umfasst:
- einen Schritt (28) zur Aufnahme eines Abschnitts der Oberfläche der holografischen Matrix in der kopiergeschützten Zone, gefolgt von einem Schritt zum Behandeln des durch die Aufnahme erhaltenen Bildes, um daraus eine Fehlerquote für jede kopiergeschützte Zone zu extrahieren,
- einen Schritt (30) zum Verschlüsseln einer ersten Nachricht für jede kopierfeste Zone, die eine kopiergeschützte Zone umgibt, unter Verwendung des im Laufe des Schrittes zur Aufnahme erhaltenen Ergebnisses für diese kopiergeschützte Zone, wobei das Ergebnis der Verschlüsselung zu einem späteren Zeitpunkt zum Bilden der kopierfesten Zone verwendet wird.

2. Verfahren nach Anspruch 1, wobei man im Laufe des Schrittes zum Bilden (24) der kopiergeschützten Zone (15) einen Pikosekunden-Laser einsetzt.

## Claims

1. Method of marking a holographic matrix (10), comprising:
- a step (20) of forming the holographic matrix, configured to produce holograms by printing;
- a step (24) of forming on said holographic matrix at least one anti-copy zone (15), containing redundancies; and
- a step (32) of forming at least one copy-robust zone (14) on said holographic matrix,
at least one of the steps of forming at least one zone on said holographic matrix utilizing laser surface structuring of the holographic matrix,
the method being **characterized in that** it comprises, after said step of forming said anti-copy zone, and before said step of forming said copy-robust zone:
- a step (28) of capturing an image of a portion of the surface of the holographic matrix in said anti-copy zone, followed by a step of processing the image obtained by said image capture to extract an error rate therefrom for each anti-copy zone;
- a step (30), for each said robust zone surrounding a said anti-copy zone, of encrypting a first message by using the result obtained, for this said anti-copy zone, during said image capture step, the encryption result being used subsequently for said formation of said robust zone.

2. Method according to claim 1, wherein, during the step (24) of forming the anti-copy zone (15), a picosecond laser is utilized.
